# EUROPEAN PATENT APPLICATION

(11) **EP 3 178 643 A1**
(43) Date of publication of application: **14.06.2017**
(21) Application number: 15199307.8
(22) Date of filing: 10.12.2015
(51) Int. Cl.: B32B 5/02, B32B 5/20, B32B 5/24, B32B 5/26, B32B 7/04, B32B 7/08, B32B 13/02, B32B 13/14, B32B 27/12, B32B 3/06, B32B 3/28, E04B 1/16, E04C 5/07

(54) **METHOD OF MANUFACTURING A COMPOSITE STRUCTURE INCLUDING A TEXTILE FABRIC ASSEMBLY**

(71) Applicant: Danmarks Tekniske Universitet, 2800 Lyngby (DK)
(72) Inventor: Fischer, Gregor, 12209 Berlin (DE)
(74) Representative: Plougmann Vingtoft a/s

(57) **Abstract**

The invention relates to a textile fabric assembly (1) comprising at least two textile layers (2). The textile layers (2) are joined at a plurality of points (3) and/or along a plurality of lines (6) so that they form inner and outer walls, respectively. The invention also relates to a method of manufacturing a composite structure (10). The method may comprise providing a form (8) that has a shape corresponding to a desired shape of an internal cavity in the composite structure (10) to be manufactured. The textile fabric assembly (1) is arranged around the form (8), and a curable material (9) is filled into the at least one inner space (4) between the textile layers (2). The form (8) may be inflatable. Alternatively, the method may comprise arranging the textile fabric assembly (1) around an initial structure and/or mechanically fastened to a surface of an initial structure to be reinforced and then filling it with a curable material (9).

## Description

### FIELD OF THE INVENTION

The present invention relates to a method of manufacturing a composite structure including the use of a textile fabric assembly comprising at least two layers. The invention further relates to a textile fabric assembly which may be used in such a method.

### BACKGROUND OF THE INVENTION

The use of concrete walls and spanning building elements date back to Roman times. With the invention of reinforced concrete, the tensile capability of steel was integrated with the compressive strength of concrete to produce relatively strong, efficient, and cost-effective structures. From ancient times, the capabilities of vaulted structures to efficiently span longer distances was well known and practiced. Vaulted structures are formed such as to cause all structural elements to be stressed principally in compression. Reinforced concrete is able to act as a homogenous material, and may be shaped using vaults, domes, or other compressive structures. Reinforced concrete may be further formed such as to exhibit shell structural behaviour. Shells are formed as thin, singly- or doubly-curved surfaces, e.g., domes, vaults, and hyperbolic paraboloids. Shells are typically lighter, stronger, and more structurally efficient than other vaulted structures. Like vaulted structures, the majority of stress in properly formed shells are in compression. However, tension stresses inevitably develop in vaults and shells, and therefore tensile reinforcement is necessary to ensure structural integrity.

In order to reinforce a thin structural shell, a variety of techniques have been devised in the prior art. An early development of such reinforcement is included in what is commonly referred to as ferrocement. The ferrocement technique consists of adding successive layers of concrete or grout over steel wires or mesh to buildup a thin-walled structural shell. A number of buildings and other structures have been successfully built with ferrocement; however, the technique is quite exacting and labour-intensive given the close tolerances of the steel mesh and the thin concrete covering. In addition, mesh is typically formed in a rectangular grid pattern, and may be difficult to properly cut and fit over a doubly-curved surface. A further problem is that some cracking is inevitable in concrete structures. The cracks may allow water to contact the steel reinforcement, causing the steel to rust, the concrete to spall, and the structure to deteriorate. The doubly-curved shape of shells present a great challenge in the construction of temporary formwork. As a result, the relative savings of material usage of a shell structure is often offset by very high forming costs.

In an attempt to provide easier and more cost-effective temporary formwork for shell structures, a number of methods have been proposed in the prior art. One well-known example constructs a dome using an inflated balloon as temporary formwork. After inflating the balloon, temporary scaffolding is placed around the formwork allowing steel reinforcement to be placed near the exterior of the formwork surface. After the reinforcement is installed, concrete is placed; such placement is typically made by spraying the concrete to form a continuous layer encapsulating the reinforcement. After the concrete has reached sufficient strength, the temporary scaffolding may be removed, and the balloon formwork deflated. In cases where the dome requires insulation, a foam insulation is typically sprayed on the interior concrete surface. Such a use of air-inflated balloon formwork may be advantageous to decrease the time, complexity, and expense of making formwork for shell structures using conventional methods. However, it will also be seen that the required steps of adding temporary scaffolding in order to place reinforcing steel is not an optimum construction methodology.

The "Binishell" method disclosed in the prior art eliminates the need for such temporary scaffolding. In this method, reinforcing steel is placed in a grid having flexible joints on top of a balloon formwork in a deflated state, concrete is poured on top of the reinforcement, and the balloon is inflated to a predetermined size. Achieving a successful outcome using this method requires the proper deployment of the reinforcement grid geometry during inflation of the balloon formwork. Furthermore, the proper liquid state of the concrete is critical. If the concrete is too stiff, the balloon pressure may be insufficient to lift the concrete and achieve the predetermined dome size. If the concrete is too liquid, the concrete will sag or run as it is lifted by the balloon formwork. Due in large part to the challenges in properly deploying the reinforcement grid geometry and coordinating formwork lifting with the concrete liquid state, the method has been principally limited to dome forms of relatively small size. The limitation on size is due to the inability in most instances to place a large area of concrete within a short span of time as is necessary if the concrete is to reach the same liquid state at about the same point in time. As with the aforementioned system, insulating the completed concrete dome typically requires the additional steps of deflating and removing the balloon formwork, and spraying foam insulation to the interior concrete dome surface.

In US 4,007,177 (Boothroyd, et al, 1978), a method for forming a shell structure is disclosed in which fiber-reinforced concrete is proposed as a substitute for conventionally-reinforced concrete which uses reinforcing bars, mesh, and the like. An inflated balloon serves as formwork, which is coated with foam on the interior or exterior surface and fiber-reinforced concrete on the opposed surface. In another embodiment, the foam may be layered on the interior and exterior surface to produce a sandwich construction. It may be argued that the method provide improvements compared to other methods in that the formwork need not be removed and in that fiber-reinforced concrete eases the difficulty of placing conventional reinforcing bars and mesh over the curved or doubly curved surface. However, the formwork serves only as a backing surface to apply a first foam layer, and the method still requires the additional construction steps of applying hand-trowelled layers of fiber-reinforced concrete to the interior and/or exterior of the foam layer.

In US 4,446,083 (Nicholls, 1984), a method for forming a shell structure is disclosed which proposes fiber-reinforced fabric as a substitute for conventionally reinforced concrete which uses reinforcing bars, mesh, and the like. An inflated balloon serves as formwork, which is overlaid with dry grout, an additional reinforcing fabric layer, an additional layer of grout, and a final reinforcing fabric layer. The method offers an improvement in that the fabric is used as reinforcement. However, the method is limited to use with a special means of hardening the grout, and requires considerable handwork for the placement of the grout and fabric layers.

In US 4,495,235 (Tesch, 1985), a method for forming flat cementitious sheets having reinforced fabric facings is disclosed. The method may be used to manufacture panels having high strength and ductility. However, the method is limited to flat sheet forming and a needle bonding method of connecting the opposed fabric sheets through the intervening matrix.

In conclusion, it may be seen that the shell structures and forming methods evidenced in the prior art suffer from a number of defects and limitations, including the necessity for complex and expensive formwork and scaffolding, difficulty in placing reinforcement, vulnerability of the reinforcement to rust, the requirement for a number of construction operations including placement and removal of temporary formwork, and limitation to specific structural forms, typically these being of dome shape. Despite these disadvantages, thin concrete shells have a number of highly desirable aspects. For example, concrete is relatively inexpensive and available in most parts of the world, and shells are among the most efficient structural types.

Hence, an improved method of manufacturing a composite structure would be advantageous.

### OBJECT OF THE INVENTION

It is an object of the present invention to provide a method of manufacturing a composite structure which is more efficient and less laborious than known methods.

It is another object of the invention to provide a method of manufacturing a composite structure making it possible to have smaller overall dimensions for a given desired strength, stiffness and stability.

It is another object of the invention to provide a method of manufacturing a composite structure having a higher strength-to-weight or stiffness-to-weight ratio than what is possible with known methods.

It is an object of at least some embodiments of the present invention to provide a method which facilitates the repair or reinforcement of an existing structure.

It is another object of at least some embodiments of the present invention to provide a method which makes it possible to manufacture composite structures having a more complex geometry than what is possible with known methods.

It is an object of some embodiments of the present invention to provide a method of manufacturing a composite structure having built-in additional properties, such as corrosion-resistance.

It is a further object of the present invention to provide an alternative to the prior art.

In particular, it may be seen as an object of the present invention to provide a manufacturing a composite structure that solves the above-mentioned problems of the prior art.

### SUMMARY OF THE INVENTION

Thus, the above described object and several other objects are intended to be obtained in a first aspect of the invention by providing a textile fabric assembly comprising at least two textile layers, which textile layers are joined at a plurality of points and/or along a plurality of lines so that the textile layers form inner and outer walls, respectively, with at least one inner space there between, which at least one inner space is an enclosure with at least one inlet, the at least one inlet providing an opening into the inner space.

The joining of the layers may e.g. be obtained by sewing, riveting, gluing or welding. However, any method of joining which can resist the forces exerted on the joints during the intended use of the textile fabric assembly is covered by the present invention. Such methods of use will be described in further details below.

The shape of the textile fabric assembly may e.g. be tubular, spherical, rectangular or freeform. For tubular shaped textile fabric assemblies, the cross-section may e.g. be circular, quadratic or rectangular, and the cross section may be constant or varying along a length of the textile fabric assembly.

In some embodiments of the invention, the at least one inner space is substantially empty before use of the textile fabric assembly, and/or the textile fabric assembly may be suitable for use in a method as will be described below. Alternatively, the inner space may be partially filled e.g. with a material which provides desired properties to the composite structure to be made from the textile fabric assembly. Some examples are given below.

The textile layers may be joined so that the at least one inner space has the form of channels, such as channels extending substantially in the circumferential direction of the textile fabric assembly.

The at least two textile layers can be made from the same material, or the at least two textile layers can be different. They can e.g. be made by different materials or layers formed from the same material but with different properties; e.g. in relation to the coarseness of the weaving.

The textile layers may be made from fibres of one or more of the following materials: synthetic, metallic, mineral or natural fibres. Some more specific examples are: polypropylene, PVC, nylon, aramid, carbon, basalt, steel, and sisal.

In some embodiments of the invention, the textile layers are joined by baffles so that the textile layers can be separated by a distance corresponding to the dimension of the baffles at positions of joining. By "baffles" are preferably meant "a partition in a channel"; i.e. a partition extending between two textile layers to form a partition wall in an inner channel forming the inner space. This will be explained in further details in relation to the figures.

A textile fabric assembly according to the present invention may further contain additional material providing one or more of the following properties to the textile fabric assembly and thereby to a composite structure for which it is used: flame-retardance, chemical resistance against predetermined influences, water resistance, permeability, and tensile strength. The invention may thus be used to provide a strong and relatively light structure able to incorporate non-corrosive reinforcement fabric and to thereby be relatively invulnerable to structural reinforcement degradation due to water intrusion.

Such additional material may be provided in a space between at least two of the textile layers, such as a space not intended to be filled with the curable material. Examples of possible designs having this feature will be shown in the figures.

A textile fabric assembly as described above may further comprise means for connecting the textile fabric assembly with another textile fabric assembly arranged with ends adjacent to each other. Such means for connecting could e.g. be hooks or zippers. The textile fabric assembly could alternatively be joined e.g. by sewing, gluing or welding so that the means for connecting would allow for such connecting, e.g. in the form of flaps or the like to which the means could be prearranged or be arranged, such as applied, during the assembly.

In some embodiments of the invention, the textile layer forming the inner wall may be formed integrated with an inflatable form, so that it is suitable for use in a method comprising the use of an inflatable form; see below for further details. In such embodiments, the inner wall and the inflatable form could e.g. be glued or welded together.

In a second aspect, the invention relates to a method of manufacturing a composite structure, the method comprising the steps of:
- providing a textile fabric assembly as described above,
- providing a form that has a shape corresponding to a desired shape of an internal cavity in the composite structure to be manufactured,
- arranging the textile fabric assembly around the form,
- filling a curable material into the at least one inner space between the textile layers via the at least one inlet, and
- curing the curable material.

It is one of the ideas behind the present invention that the textile fabric assembly will preferably provide a lasting reinforcing effect to the composite structure being manufactured and not just hold the curable material in place until it has cured. Hereby the step of removing formwork as in a typical method of manufacturing a cast structure is eliminated. The method furthermore provides relative ease in ensuring the proper placement of structural reinforcement in relation to the curable material.

In presently preferred embodiments of a method according to the invention, the form is an inflatable form, and the step of providing the form comprises inflating the form. Such inflation is typically performed by use of a pump. The form can be inflated with e.g. air or water, and the inflatable form will be made from a membrane material that is impermeable to the fluid used for the inflation. Examples of possible materials for the form are: PP, PVC, PTFE, ETFE, PET, and EPDM. When the method is used for manufacturing a composite structure under water, the inflation is typically performed by use of water to prevent the form from floating upwards.

In methods including the use of an inflatable form, the method may further comprise the step of deflating and removing the form after the step of curing the curable material. Alternatively, it may for some applications be desired that the form remains inside the composite structure after curing of the curable material. This could e.g. be the case if the form itself provides some desired properties to the composite structure being manufactured, such as strength, smoothness, or water resistance. A form which remains inside the composite structure could e.g. be filled with foam to assist in keeping the shape especially during manufacturing and for providing thermal insulation.

The cross-section of the form may e.g. be selected from: circular, oval, triangular, rectangular, planar, curved planar (such as U-shape), and shell forms (such as dome or hyperbolic-paraboloid). It will be chosen to match the desired cross-section of an inner cavity of a given composite structure to be manufactured.

Alternatively, the second aspect of the invention relates to a method of manufacturing a composite structure, the method comprising the steps of:
- providing a textile fabric assembly as described above,
- arranging the textile fabric assembly around an initial structure and/or mechanically fastened to a surface of an initial structure to be reinforced,
- filling a curable material into the at least one inner space between the textile layers via the at least one inlet, and
- curing the curable material.

In some embodiments of the invention, the textile fabric assembly used comprises a textile layer forming the inner wall or the outer wall which is permeable to the curable material so that a part of the curable material will flow through the permeable textile layer during the step of the filling the curable material into the at least one inner space between the textile layers. By such a design, a part of the curable material will flow into a space outside the outer layer. This may e.g. be used to provide a joining between the composite structure and a surrounding structure, such as a structure to be reinforced by the method. A possible application of such an embodiment will be described in relation to the figures.

The curable material may selected from: concrete, polymer, polymer foam, and wherein the curable material may furthermore be fibre reinforced. In a specific embodiment which may be particularly interesting in the building and construction industry, the curable material is fibre reinforced concrete.

The present invention may thus provide a method and structure capable of incorporating advanced engineered cementitious composites, and to have such material fully cooperate with a fabric assembly, and to thereby form a ductile composite planar or freeform sheet or a shell structure resistant to cracking and degradation due to moisture intrusion or imposed structural loads

In a third aspect, the present invention relates to the use of a method as described above for repairing or reinforcing existing structures, such as concrete pipes, tunnels or chambers. Examples of other possible applications are: new linings or structures, including for obtaining water proofing, fire proofing, and insulation.

The first, second and third aspects of the present invention may each be combined with any of the other aspects. These and other aspects of the invention will be apparent from and elucidated with reference to the embodiments described hereinafter.

### BRIEF DESCRIPTION OF THE FIGURES

The textile fabric assembly and the use thereof in a method according to the invention will now be described in more detail with regard to the accompanying figures. The figures show one way of implementing the present invention and is not to be construed as being limiting to other possible embodiments falling within the scope of the attached claim set.
Figure 1 shows schematically different embodiments of textile fabric assemblies according to the present invention.
Figure 2.a shows schematically various possible designs used for textile fabric assemblies being joined at a plurality of points, and figure 2.b shows schematically various possible designs used for textile fabric assemblies being joined along a plurality of lines.
Figure 3 shows schematically a cross-sectional end view of a method according to the present invention.
Figure 4 shows schematically a side view and a sectional view of the embodiment in figure 3.
Figure 5 shows photos of a tubular composite structure which has been manufactured by a method according to the present invention.
Figure 6 shows schematically different types of joints between textile layers of the textile fabric assembly.
Figure 7 shows schematically a textile fabric assembly comprising an additional filling material being filled into spaces between textile layers in addition to the curable material.
Figure 8 shows schematically a method according to the present invention being used for providing an inner composite structure in a pipe or tunnel.
Figure 9 shows schematically embodiments of the invention with one of the textile layers being permeable to the curable material.
Figure 10 shows schematically how a method according to the invention can be used to reinforce an inner cavity of a closed structure.
Figure 11 shows schematically possible ways of connecting two textile fabric assemblies.

### DETAILED DESCRIPTION OF AN EMBODIMENT

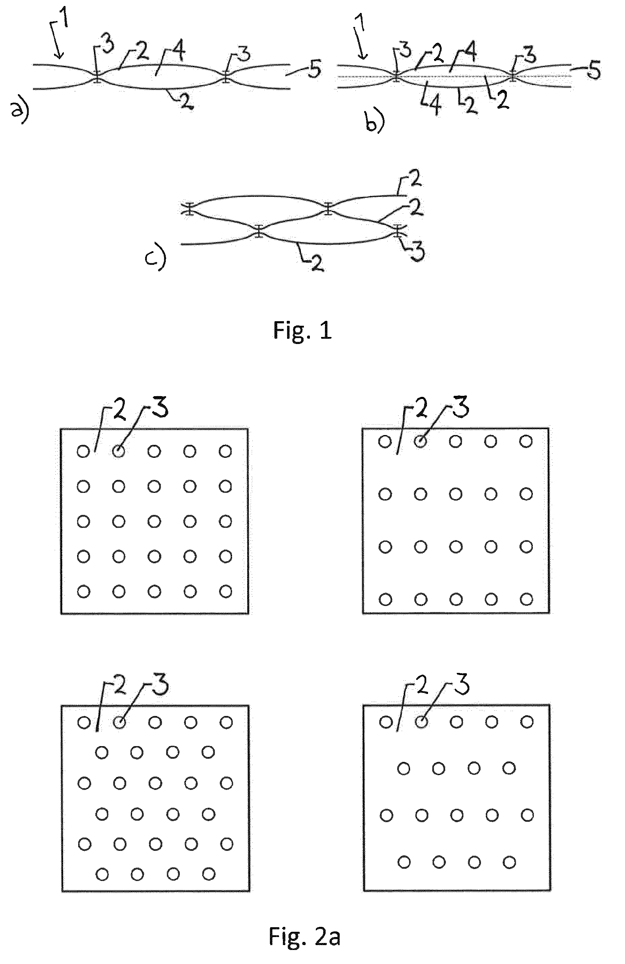

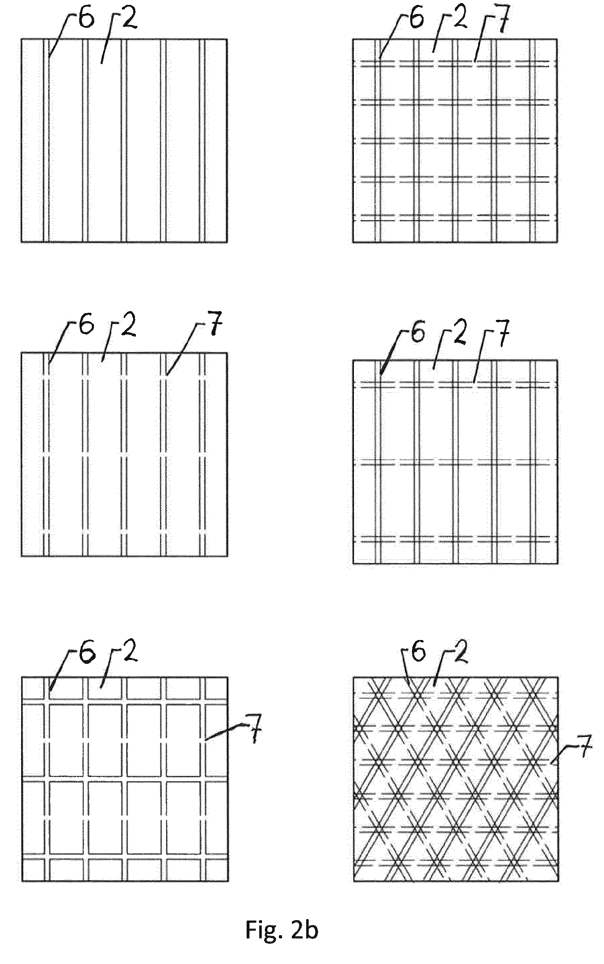

Figure 1 shows schematically a section of a textile fabric assembly 1 according to the present invention. The embodiment in figure 1.a comprises two textile layers 2 which are joined at a plurality of points 3 so that the textile layers 2 form an inner wall and an outer wall, respectively. Between the two textile layers are at least one inner space 4. The one inner space 4 is an enclosure with at least one inlet 5, the at least one inlet 5 providing an opening into the inner space 4. Figures 1.b and 1.c show schematically alternative embodiments having three textile layers 2. These figures illustrate that all textile layers 2 can be joined at the same positions or at different positions. The textile layers 2 may be joined at points 3 and/or along a plurality of lines 6. Different possible arrangements are shown schematically in figure 2 showing top views of the textile layers 2 to better illustrate the arrangements of the joints 3,6. Figure 2.a shows examples of point 3connections, and figure 2.b shows examples of line 6 connections. The textile layers 2 may also be joined at a combination of points 3 and lines 6. The actual type and arrangement of the connections will be determined as a part of the design process for a given application. For example point connections would typically be preferred for doubly curved structures as they give a more flexible structure which makes it possible to obtain the more complicated shapes. Lines are good for single curvature shapes as they may provide a stronger connection between the textile layers. When the textile layers 2 are joined along lines 6, there will be gaps 7 in the lines 6 to allow passage of curable material 9 as shown in figure 2.b.

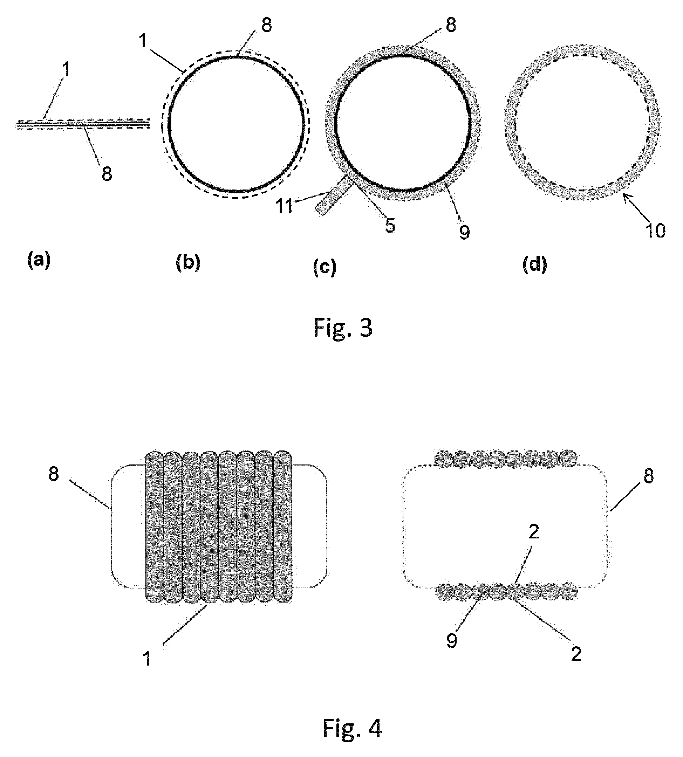

A method of manufacturing a composite structure 10 by use of a textile fabric assembly 1 as described above is shown schematically in figure 3. The figure shows an embodiment with a circular cross-section. In this embodiment, an inflatable form 8 is used to provide the shape of an inner cavity in the composite structure 10. The method comprises providing a textile fabric assembly 1, such as one of those of figures 1 or 2; this is shown in figure 3.a. Then a form 8 having a shape corresponding to a desired shape of an internal cavity in the composite structure 10 to be manufactured is provided, and the textile fabric assembly 1 is arranged around the form 8; this is shown in figure 3.b. In this embodiment, the form 8 is provided as an inflatable form which is inflated after having the textile fabric assembly 1 arranged around it. In alternative embodiments a non-inflatable form can be used. Then a curable material 9 is filled into the at least one inner space 4 between the textile layers 2 via the at least one inlet 5; this is shown in figure 3.c. The design of the inlet 5 depends on the actual material being filled into the inner space 4. Suitable designs for a given material and supply rate will be well-known to a person skilled in the art. The inlets 5 may e.g. be fastened to the textile fabric assembly 1 with hooks or zippers or by sewing, gluing or welding.

The curable material 9 is typically filled into the at least one inner space 4 by a pump (not shown) connected to through a hose 11 to the at least one inlet 5, and it must thus have a pumpable consistency. Once the inner space 4 has been filled, the inlet 5 is closed off such that the curable material 9 remains in the inner space 4, and the hose 11 disconnected. The curable material 9 is then cured, and figure 3.d shows that the inflatable form 8 has then been deflated and removed. The resulting composite structure 10 consists of a thin-walled shell of layered textile fabric internally filled with a cured material 9 with a cross-sectional shape previously given by the shape of the inflatable form 8.

Figure 4 shows schematically an end view of the embodiment in figure 3 in which the two textile layers 2 have been joined so that the at least one inner space has the form of channels extending substantially in the circumferential direction of the textile fabric assembly 1. Figure 4.a shows how the inflatable form 8 extends beyond the ends of the tubular textile fabric 1 assembly so that it supports the composite structure 10 being manufactured during filling with and curing of the curable material 9. Figure 4.b is a cross-sectional view showing how the inflatable form 8 supports the textile fabric assembly 1.

The textile layers 2 are typically made from fibres of one or more of the following materials: synthetic, metallic, mineral or natural fibres. Some more specific examples are: polypropylene, PVC, nylon, aramid, carbon, basalt, steel, and sisal. However, any material which can be provided in fibre form and made to textile layers, typically by weaving, can find use in the present invention. The textile layers 2 can be made from the same material, or the at least two textile layers 2 can be different. They can e.g. be made by different materials or layers formed from the same material but with different properties; e.g. in relation to the coarseness of the weaving. The curable material 9 is typically selected from: concrete, polymer, polymer foam, and it may furthermore be fibre reinforced. A specific curable material 9 which have been studied during the development work in relation to the present invention is fibre reinforced concrete. The resulting mechanical properties of a given composite structure manufactured will then be a combination of the properties of the textile layers 2 and of the curable material 9. The properties of the latter may again be a combination of the properties of a matrix and of the fibres, including the orientation thereof.

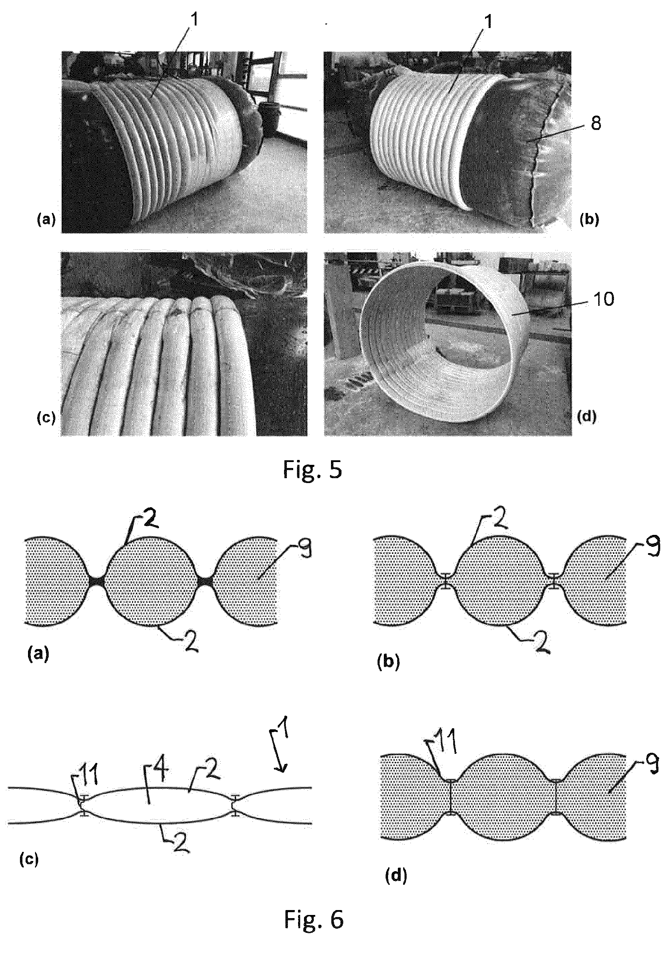

Figure 5 shows photos of tests which have been performed during the development of the present invention. Figure 5.a shows the textile fabric assembly 1 arranged around an inflatable form 8 during filling of the inner space 4 with curable material 9. It can be seen that a part of the inner space 4 has not yet been filled. Figure 5.b shows the situation after the whole of the inner space 4 has been filled. Figure 5.c is a close-up of the filled textile fabric assembly 1. Figure 5.d shows the final composite structure 10 after the inflatable form 8 has been removed.

The textile layers 2 constituting the textile fabric assembly 1 may be joined in a number of ways, such as by gluing or welding as shown schematically in figure 6.a or by mechanical means, such as sewing or rivets as shown schematically in figure 6.b. In yet another embodiment, the textile layers 2 are joined by baffles 11 so that the textile layers 2 can be separated by a distance corresponding to the dimension of the baffles 11 at positions of joining; this is shown schematically in figures 6.c and 6.d showing the unfilled and filled, inner space, respectively.

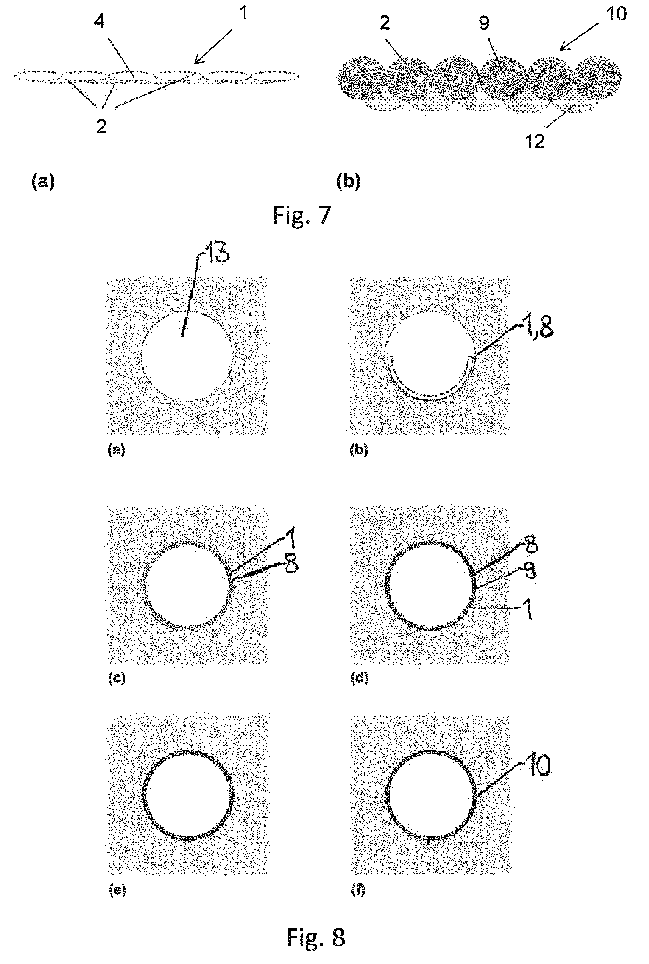

Figure 7 shows schematically a textile fabric assembly 1 containing additional material 12 providing additional properties to the textile fabric assembly 1 and thereby to a composite structure 10 for which it is used. Such additional properties may e.g. be flame-retardance or chemical resistance against predetermined influences which may occur at the place of installation of the structure. In the embodiment shown in figure 7, the additional material 12 is provided between two of the textile layers 2 adjacent to the inner space 4 being formed by two textile layers 2. Figure 7.a and 7.b show the textile fabric assembly 1 before and after filling of the inner space 4 with curable material 9, respectively. The additional material 12 providing the additional properties may be prefilled in cavities of the textile fabric assembly 1, or it may be filled in after the textile fabric assembly 1 has been arranged e.g. around the form 8; the latter option is the case in figure 7.

A method as described above may find use in a number of applications. It may e.g. be used for repairing or reinforcing existing structures, such as concrete pipes, tunnels or chambers. Figure 8 shows schematically how the method can be used to reinforce a pipe 13 having a circular cross section; this is for illustrative purposes only, and the mutual dimensions of the elements are not drawn to scale. Any other shapes of composite structures can be made with a method according to the present invention. Figure 8.a shows the pipe 13 before reinforcement and figure 8.b shows the textile fabric assembly 1 and an inflatable form 8 arranged in the pipe 13. The textile fabric assembly 1 and the inflatable form 8 can e.g. be arranged manually or by mechanized or automated methods. In figure 7.c the form 8 has been inflated, and in figure 7.d curable material 9 has been pumped in to the inner space in the textile fabric assembly 1. For many constructional applications, the curable material 9 will be fibre reinforced concrete. However, the method may also be used for providing pipes with protection with an additional lining, e.g. in case it is to be ensured that drainage pipes do not leak anything into the surrounding soil. The curable material 9 is left to cure as shown in figure 7.e. The necessary time will vary e.g. dependent on the actual material used as well as on parameters such as the temperature and humidity. As a final step the inflatable form 8 may be removed leaving the composite structure 10 inside the now reinforced pipe 13 as shown in figure 7.f.

When the method is used for reinforcing long structures, such as a tunnel, it may be advantageous to use a movable form which is advanced along the structure to be reinforced as the work progresses. For a simple cylindrical form, it could be partially deflated and pulled to the next position using hand or mechanical means. For a toroidal cylindrical form, it could remain fully or partially inflated and rolled into itself to be moved by hand or mechanical means to the next position.

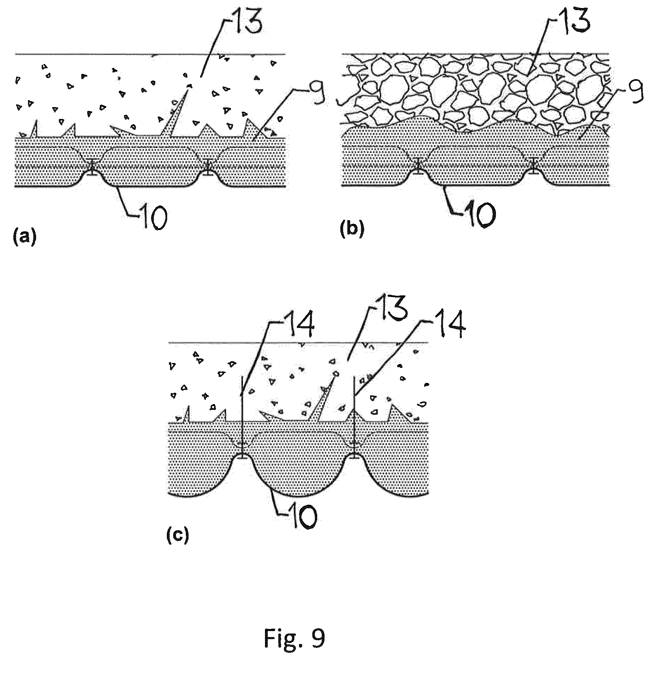

For some applications of the invention, it may be advantageous to use a textile fabric assembly 1 wherein the textile layer 2 forming the outer wall which is permeable to the curable material 9, so that a part of the curable material 9 will flow through the outer wall during the step of the filling the curable material 9 into the at least one inner space 4 between the textile layers 2. Such an embodiment may typically be used to obtain a bonding between the surrounding structure, such as a tunnel being repaired or reinforced, and the composite structure 10 being used to repair it. Examples of how this can look is shown schematically in figure 9. Such a method may e.g. be used to provide a shell wrap on the exterior of an existing element or to provide a shell lining on the interior of e.g. a bored shaft. As seen in figure 9, the curable material 9 which has flowed out of the inner or outer wall of the textile fabric assembly 1, respectively, will fill-up the space between the textile fabric assembly 1 and the structure 13 being reinforced. It may even flow into cracks in the surface of the structure to provide further strengthening thereof as shown in figure 9.a. Figure 9.c. also illustrates that the textile fabric assembly may be fastened to the existing structure by fastening means 14, such as nails or screws. In such an embodiment, it may be possible to use the textile fabric assembly 1 without the need for a form 8 in the process of forming the composite structure 10. It could e.g. be fastened to the internal sides of a tunnel before being filled with the curable material 9, so that it would be held in place by the means used to fasten it to the internal sides without any further support. Such a method without the use of a form 8 can be applied e.g. when a pre-existing structure being repaired or reinforced is capable of receiving a fastener and provide sufficient pull-out resistance when filling between the two textile layers 2 with curable material 9.

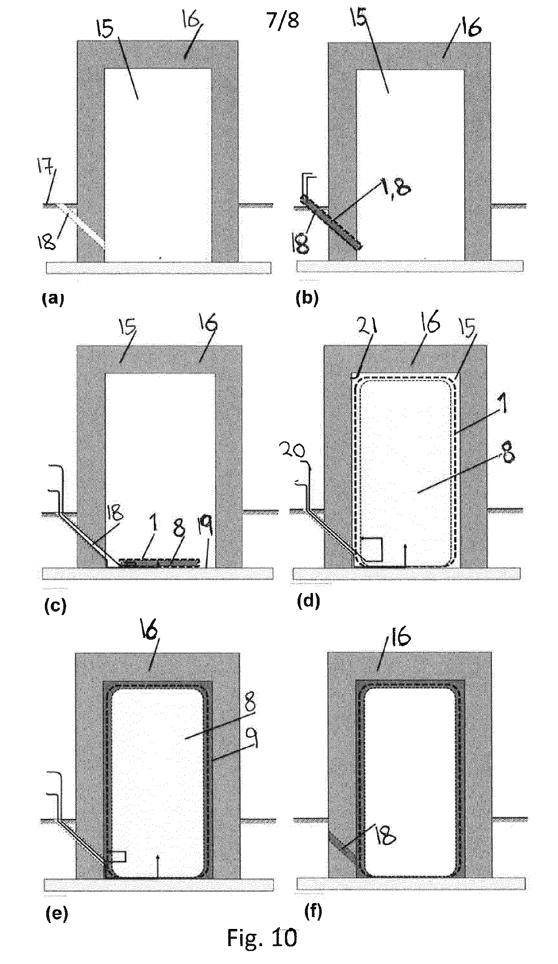

Figure 10 shows schematically how a method according to the invention can be used to reinforce an inner cavity 15 of a closed structure 16 which in the illustrated embodiment extends to below ground surface 17. The structure is shown in cross-sectional view. As shown in figure 10.a, a channel 18 is established from the outside and into the inner cavity 15; this can e.g. be done by drilling. Figure 10.b shows how the textile fabric assembly 1 and an inflatable form 8 is transported into the inner cavity 15 via the channel 18. Figure 10.c shows the textile fabric assembly 1 and the inflatable form 8 placed at the bottom surface 19 of the inner cavity 15 ready for use. As shown in figure 10.d, inflation of the inflatable form, typically by use of pressurized air 20 from the outside, results in the textile fabric assembly 1 being moved by the inflatable form 8 to a position close to the surfaces 21 of the inner cavity 15. Then curable material 9 is filled into the at least one inner space between the textile layers 2 and preferably through the textile layer 2 forming the outer wall of the composite structure as shown in figure 10.e and left to cure. When the curable material 9 has cured, the pressure used to keep the form inflated is released as shown in figure 10.f. Typically the form is kept inside the structure, but it may also be retracted provided that a hole is left open in the composite structure to allow for such retraction. Finally, the channel 18 is filled again. By such a method, it will be possible to reinforce a closed structure 16 from the inside, leaving the outer appearance unchanged.

During use of a method as described above, the quality of the work should preferably be monitored continuously. In particular, it should preferably be monitored that the filling with the curable material 9 fills up all, or at least most, of the inner space 4. When there is direct access to the textile fabric assembly 1, such monitoring may be manual, whereas when the method is used, e.g. for the repair of pipes or tunnels without direct access, the filling may e.g. be followed with camera inspection or by use of appropriate sensors. If the inspection shows that some parts of the textile fabric assembly 1 is not filled as intended, it may be necessary to perform some kind of top-up filling. For structures where this might be relevant, it will be possible to add additional, possibly redundant, inlet tubes to the textile fabric assembly.

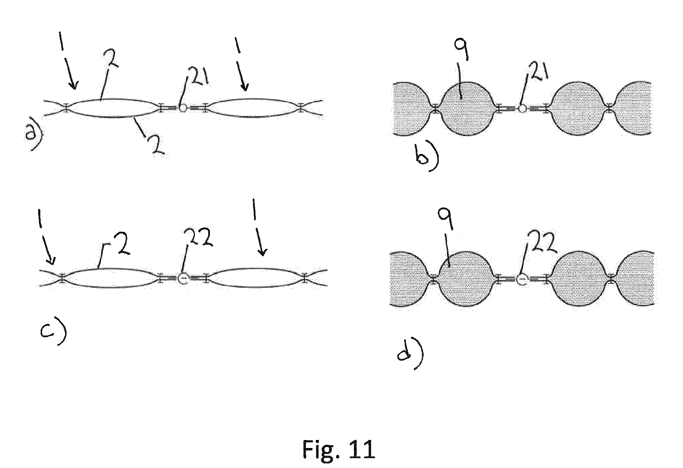

For composite structures 10 that are to extend over a longer stretch, such as reinforcement of long tunnels or pipes, the textile fabric assembly 1 used may typically be made up of a number of textile fabric assemblies 1 as described above arranged in an end-to-end connection. They will preferably each comprise means for connecting the textile fabric assembly 1 with another textile fabric assembly 1 arranged with ends adjacent to each other. Such means for connecting could e.g. be hooks or zippers as shown schematically in figures 11. Figures 11.a and figure 11.b show two sections of textile fabric assembly joined by a zipper 21 before and after filling with curable material 9, respectively. The two textile layers 2 are shown as being joined with mechanical fasteners, but other means of joining is also possible as explained above. Figures 11.c and 11.d show in a similar manner joining by hook-and-eyelet connections 22. The connection is shown schematically only, but various possible designs providing joining will be known to a person skilled in the art.

The textile fabric assembly could alternatively be joined e.g. by sewing, gluing or welding so that the means for connecting would allow for such connecting, e.g. in the form of flaps or the like to which the means could be prearranged or be arranged, such as applied, during the assembly.

As seen from the above descriptions, the present invention provides a time and cost saving method using prefabricated fabric assembly sections able to be folded or rolled into a compact shape, unrolled in situ, joined to like prefabricated fabric assembly sections, held in a predetermined shape in internal and/or external position to a pre-existing structure, and filled with curable material thereby forming a new structure, or a retrofit to a pre-existing structure.

The above given description relates to inflatable forms. However, the invention also covers a similar method using a non-inflatable form.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Furthermore, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Textile fabric assembly (1) comprising at least two textile layers (2), which textile layers (2) are joined at a plurality of points (3) and/or along a plurality of lines (6) so that the textile layers (2) form inner and outer walls, respectively, with at least one inner space (4) there between, which at least one inner space (4) is an enclosure with at least one inlet (5), the at least one inlet (5) providing an opening into the inner space (4).

2. Textile fabric assembly (1) according to claim 1, wherein the at least one inner space (4) is substantially empty before use of the textile fabric assembly (1), and/or wherein the textile fabric assembly (1) is suitable for use in a method according to any of claims 9 to 14.

3. Textile fabric assembly according to claim 1 or 2, wherein the textile layers (2) are joined so that the at least one inner space (4) has the form of channels, such as channels extending substantially in the circumferential direction of the textile fabric assembly (1).

4. Textile fabric assembly (1) according to any of the preceding claims, wherein the textile layers (2) are made from fibres of one or more of the following materials: synthetic, metallic, mineral or natural fibres.

5. Textile fabric assembly (1) according to any of the preceding claims, wherein the textile layers (2) are joined by baffles (11) so that the textile layers (2) can be separated by a distance corresponding to the dimension of the baffles (11) at positions of joining.

6. Textile fabric assembly (1) according to any of the preceding claims, further containing additional material (12) providing one or more of the following properties to the textile fabric assembly (1) and thereby to a composite structure (10) for which it is used: flame-retardance, chemical resistance against predetermined influences, water resistance, permeability, and tensile strength.

7. Textile fabric assembly (1) according to any of the preceding claims, further comprising means for connecting the textile fabric assembly (1) with another textile fabric assembly arranged with ends adjacent to each other.

8. Method of manufacturing a composite structure (10), the method comprising the steps of:
- providing a textile fabric assembly (1) according to any of claims 1 to 7,
- providing a form (8) that has a shape corresponding to a desired shape of an internal cavity in the composite structure (10) to be manufactured,
- arranging the textile fabric assembly (1) around the form (8),
- filling a curable material (9) into the at least one inner space (4) between the textile layers (2) via the at least one inlet (5), and
- curing the curable material (9).

9. Method of according to claim 8, wherein the form (8) is an inflatable form, and the step of providing the form (8) comprises inflating the form (8).

10. Method according to claim 9, further comprising the step of deflating and removing the form (8) after the step of curing the curable material (9).

11. Method of manufacturing a composite structure (10), the method comprising the steps of:
- providing a textile fabric assembly (1) according to any of claims 1 to 7,
- arranging the textile fabric assembly (1) around an initial structure and/or mechanically fastened to a surface of an initial structure to be reinforced,
- filling a curable material (9) into the at least one inner space (4) between the textile layers (2) via the at least one inlet (5), and
- curing the curable material (9).

12. Method according to any of claims 8 to 11, wherein the textile fabric assembly (1) used comprises a textile layer (2) forming the inner wall or the outer wall which is permeable to the curable material (9), so that a part of the curable material (9) will flow through the permeable textile layer (2) during the step of the filling the curable material (9) into the at least one inner space (4) between the textile layers (2).

13. Method according to any of claims 8 to 12, wherein the curable material (9) is selected from: concrete, polymer, polymer foam, and wherein the curable material may furthermore be fibre reinforced.

14. Method according to claim 13, wherein the curable material (9) is fibre reinforced concrete.

15. Use of a method according to any of claims 8 to 14 for repairing or reinforcing existing structures, such as concrete pipes, tunnels or chambers.
